# EUROPEAN PATENT SPECIFICATION

(11) **EP 2 505 522 B1**
(45) Date of publication and mention of the grant of the patent: **19.03.2014**
(21) Application number: 12161384.8
(22) Date of filing: 27.03.2012
(51) Int. Cl.: B65G 17/38, B65G 17/08

(54) **Conveyor chain**
Förderkette
Chaîne de convoyeur

(30) Priority: 30.03.2011 GB 201105345
(43) Date of publication of application: 03.10.2012
(73) Proprietor: Pennine Industrial Equipment Limited, Skelmanthorpe Huddersfield HD8 9DT (GB)
(72) Inventor: Thornton, Geoffrey, Wakefield, Yorkshire WF4 4TJ (GB)
(74) Representative: Stuttard, Garry Philip

(56) References cited:
- EP-A1- 1 241 117
- EP-A2- 1 043 248
- US-A- 2 685 361

## Description

The present invention relates to a multi-link conveyor chain which may be used (for example) in the glass industry and to a link insert for use in the multi-link conveyor chain.

Multi-link conveyor chains are in widespread use in the glass industry for transporting glass products between processing stations. For example, a multi-link conveyor chain which is typically 100 feet long may be used to transport blown glass from a blowing station to an annealing station. A multi-link conveyor chain may be used to transport small glassware such as perfume bottles, wine glasses, pharmaceutical glassware and decorated medicine bottles.

In one conventional multi-link conveyor chain, there is a plurality of parallel spaced apart elongate pins having an oval-shaped cross-section. Mounted on adjacent elongate pins are a series of link plates spaced apart along the pin by a plurality of washers, each link plate comprising a first and a second link. Each of the first and second links is capable of engaging a drive sprocket and has an oval-shaped aperture for receiving the elongate pin. The multi-link conveyor chain is driven by the engagement of the links of the link plate with the multiple teeth of a drive sprocket during a cycle of engagement. The conventional multi-link conveyor chain is assembled so that each end of the elongate pin extends beyond the outermost link plate (ie beyond the edge of the flat conveyor surface) and a pin head is fixed to each exposed end. Each end of the elongate pin is secured in a protective enclosure member (eg a head protector) that has a countersink to accommodate a pin head such that the pin head does not protrude from the enclosure member. One such arrangement is described in EP-A-1241117.

A disadvantage of the conventional multi-link conveyor chain is that gaps present between adjacent enclosure members can interfere with lateral transfer of glassware between the conveyor chain and a lateral guide or transfer plate which serves to transfer the glassware to a new processing zone. In particular, the gaps can destabilise the glassware as it passes over the enclosure members and the gaps therebetween.

The multi-link conveyor chain known as LIFEGUARD^{™} is a side guide conveyor chain which seeks to overcome this disadvantage by deploying interlocking enclosure members which provide a gap-free side profile.

The present invention seeks to improve the lateral transfer of glassware from a multi-link conveyor chain by incorporating a link insert between the enclosure members and the link plates.

Thus viewed from one aspect the present invention provides a multi-link conveyor chain adapted to provide a substantially flat horizontal surface driveable between a first processing station and a second processing station by engagement with a drive sprocket, said multi-link conveyor chain comprising:
a plurality of elongate pins spaced apart in substantially parallel relationship consisting of multiple triplets of elongate pins being a first elongate pin adjacent to a second elongate pin adjacent to a third elongate pin,
wherein the first elongate pin has a first end extending beyond a first edge of the substantially flat horizontal surface and a second end extending beyond a second edge of the substantially flat horizontal surface,
wherein the second elongate pin has a first end extending beyond a first edge of the substantially flat horizontal surface and a second end extending beyond a second edge of the substantially flat horizontal surface,
wherein the third elongate pin has a first end extending beyond the first edge of the substantially flat horizontal surface and a second end extending beyond the second edge of the substantially flat horizontal surface;
a plurality of substantially planar link plates each having a first link connected to a second link by a connecting portion, wherein each of the first link and the second link has a main body and a circumferentially dependent sprocket engaging member, wherein the main body defines an aperture whose shape essentially matches the section of an elongate pin whereby the plurality of substantially planar link plates is consecutively mounted interdigitally in a staggered relationship on the triplets of elongate pins;
a plurality of first enclosure members mutually spaced apart at the first edge of the substantially flat horizontal surface laterally spaced apart from the link plates so as to enclose the first end of each of the plurality of elongate pins, wherein each of the first enclosure members comprises a main body defining a first aperture and a second aperture, wherein the shape of each of the first aperture and second aperture essentially matches the section of an elongate pin and the depth of each of the first aperture and second aperture is sufficient to enclose the first end of an elongate pin whereby the plurality of first enclosure members includes a first enclosure member mounted on the first elongate pin and the second elongate pin;
a first pin head secured to and retaining the first end of the first elongate pin and seated in a counterbore of the first aperture;
a second pin head secured to and retaining the first end of the second elongate pin and seated in a counterbore of the second aperture; and
a plurality of first link inserts positioned in the lateral spacing between the plurality of first enclosure members and link plates, wherein each first link insert has a first link connected to a second link by a connecting portion, wherein each of the first link and the second link has a main body and a circumferentially dependent sprocket engaging member, wherein the main body defines an aperture whose shape essentially matches the section of an elongate pin, wherein the connecting portion extends laterally into a spar whose shape substantially conforms to the spacing between adjacent first enclosure members whereby the plurality of first link inserts includes a first link insert mounted on the second elongate pin and third elongate pin so that the spar extends into the spacing between the first enclosure member and an adjacent first enclosure member.

The versatility of the link insert is such that it is interchangeable in multi-link conveyor chains with a number of different types of enclosure member. When introducing a multi-link conveyor chain with the link insert of the invention into an existing system, there is the advantage that sprockets require no modification. Furthermore the joining line (gap between pitches) is approximately 50% less than on existing multi-link conveyor chains which allows greater stability of glassware.

Typically the first elongate pin, second elongate pin and third elongate pin are identical. References to "elongate pin" herein are intended to be a reference to any of the first elongate pin, second elongate pin and third elongate pin.

In a preferred embodiment, the multi-link conveyor chain further comprises:
a plurality of second enclosure members mutually spaced apart at the second edge of the substantially flat horizontal surface laterally spaced apart from the link plates so as to enclose the second end of each of the plurality of elongate pins, wherein each of the second enclosure members comprises a main body defining a third aperture and a fourth aperture, wherein the shape of each of the third aperture and fourth aperture essentially matches the section of an elongate pin and the depth of each of the third aperture and fourth aperture is sufficient to enclose the second end of an elongate pin whereby the plurality of second enclosure members includes a second enclosure member mounted on the first elongate pin and the second elongate pin;
a third pin head secured to and retaining the second end of the first elongate pin and seated in a counterbore of the third aperture;
a fourth pin head secured to and retaining the second end of the second elongate pin and seated in a counterbore of the fourth aperture; and
a plurality of second link inserts positioned in the lateral spacing between the plurality of second enclosure members and link plates, wherein each second link insert has a first link connected to a second link by a connecting portion, wherein each of the first link and the second link has a main body and a circumferentially dependent sprocket engaging member, wherein the main body defines an aperture whose shape essentially matches the section of an elongate pin, wherein the connecting portion extends laterally into a spar whose shape substantially conforms to the spacing between second adjacent enclosure members whereby the plurality of second link inserts includes a second link insert mounted on the second elongate pin and third elongate pin so that the spar extends into the spacing between the second enclosure member and an adjacent second enclosure member.

Typically the first link insert and second link insert are identical. References to "link insert" herein are intended to be a reference to either or both of the first link insert and second link insert.

Typically the first enclosure member and second enclosure member are identical. References to "enclosure member" herein are intended to be a reference to either or both of the first enclosure member and second enclosure member.

Preferably the elongate pin has a non-circular section. Particularly preferably the non-circular section of the elongate pin is substantially elliptical (or oval).

Preferably the main body of each of the first link and second link of the link insert defines a non-circular aperture whose shape essentially matches the non-circular section of an elongate pin.

Preferably the main body of each of the first link and second link of the link insert defines an aperture (eg a non-circular aperture) whose shape non-identically matches the section (eg non-circular section) of the elongate pin. The non-identical match between the section of the elongate pin and the shape of the aperture defined by the main body of the link causes the link insert to be advantageously driven by the elongate pin throughout the cycle of engagement with the drive sprocket.

The main body of each of the first link and second link of the link insert may define an aperture whose shape is elliptical or rounded rectangular.

Preferably the main body of each of the first link and second link of the link insert defines an aperture whose shape is substantially a rounded rectangle. An aperture whose shape is substantially a round rectangle causes the multi-link conveyor chain to exhibit advantageously an improved running action.

In a preferred embodiment, the circumferentially dependent sprocket engaging member of each of the first link and second link of the link insert is substantially flat-edged. Preferably each of the first link and second link of the link insert has a flat-edged, substantially teardrop profile.

Preferably the spar of the first link insert is adapted to permit substantially unhindered articulation with the first enclosure member and the adjacent first enclosure member. Preferably the spar of the second link insert is adapted to permit substantially unhindered articulation with the second enclosure member and the adjacent second enclosure member.

In a preferred embodiment, the spar of the link insert has a substantially trapezoidal section. Particularly preferably the spar of the link insert has a substantially isosceles trapezoidal section. More preferably the spar is anvil-like.

The section of the spar may have a first side substantially parallel to a second side, wherein the second side is longer than the first side. The first side and second side may be connected by a concave third side opposite to a concave fourth side. In use, the link insert is positioned with the second side uppermost.

In a preferred embodiment, the main body of the enclosure member has a substantially trapezoidal section. For example, the main body has a first side substantially parallel to a second side, wherein the second side is longer than the first side and has rounded corners. Preferably the first side has rounded corners (typically to a lesser extent than the second side). In use, the first enclosure member is positioned at the first edge with the second side uppermost. In use, the second enclosure member is positioned at the second edge with the second side uppermost. The rear face of the main body may be recessed (eg with a substantially U-shaped recess). The first (shorter) side may be closed or open. Where the first side is open, the main body adopts a twin flat-edged, substantially teardrop profile.

Preferably the shorter side is open. An enclosure member in which the shorter side is open is particularly useful in centre guide conveyor chains.

Preferably the shorter side is closed and the rear face is recessed. An enclosure member in which the shorter side is closed and the rear face is recessed is particularly useful in side guide conveyor chains.

Preferably the shorter side is closed and the rear face is non-recessed. An enclosure member in which the shorter side is closed and the rear face is non-recessed is particularly useful in multi-guide conveyor chains.

The enclosure member may be sized and configured so as to have a maximum radial extent which is equal to or less than the link plates. This ensures that the enclosure member does not interfere with the substantially flat horizontal surface.

Preferably the main body of the first enclosure member defines a first non-circular aperture and a second non-circular aperture, wherein the shape of the first and second non-circular aperture essentially matches the non-circular section of the first elongate pin and second elongate pin respectively. Preferably the main body of the second enclosure member defines a third non-circular aperture and a fourth non-circular aperture, wherein the shape of the first and second non-circular aperture essentially matches the non-circular section of the first elongate pin and second elongate pin respectively.

Preferably the counterbore is a non-tapered counterbore. Particularly preferably the non-tapered counterbore is substantially cylindrical. Particularly preferably the non-tapered counterbore is a flat recess. Particularly preferably the ratio of the depth of the non-tapered counterbore to the thickness of the enclosure member is in the range 0.58 to 0.75, particularly preferably 0.58 to 0.70. Particularly preferably the depth of the non-tapered counterbore is 3.5mm or more, particularly preferably 4.5mm or more, more preferably 6mm or more.

The first, second, third and fourth pin heads may be flat. The first, second, third and fourth flat pin heads may be spin rivetted (eg eccentrically spin rivetted) flat pin heads. The pin heads may be fully encapsulated within the counterbore.

Preferably the main body of each of the first link and second link of the link plate defines a non-circular aperture whose shape essentially matches the non-circular section of an elongate pin.

Preferably the main body of each of the first and the second link of a link plate defines an aperture (eg a non-circular aperture) whose shape non-identically matches the section (eg non-circular section) of the elongate pin. The non-identical match between the section of the elongate pin and the shape of the aperture defined by the main body of the link causes the link plate to be advantageously driven by the elongate pin throughout the cycle of engagement with the drive sprocket.

In a preferred embodiment, the circumferentially dependent sprocket engaging member of each of the first link and second link of the link plate is substantially flat-edged. Preferably each of the first link and second link of the link plate has a flat-edged, substantially teardrop profile.

Certain (eg all) link plates may be spaced apart by one or more spacers. The main body of the or each spacer may define a circular or non-circular aperture. In a preferred embodiment of the invention, each spacer comprises a main body defining a non-circular aperture for receiving the elongate pin whose shape essentially matches the non-circular section of the elongate pin.

Preferably the non-circular aperture defined by the main body of each of the first link and second link is substantially elliptical (or oval) with an enlarged side portion. Particularly preferably the enlarged side portion extends inwardly towards the connecting portion.

The multi-link conveyor chain of the invention is suitable for use in any industry which desires transportation between a first and a second station. For example, the multi-link conveyor chain of the invention could be used to transport automotive parts in the automotive industry.

Viewed from a further aspect the present invention provides a link insert as hereinbefore defined.

The present invention will now be described in a non-limitative sense with reference to the accompanying Figures in which:
Figure 1 illustrates in isolation a link insert according to a first embodiment of the invention;
Figure 2 illustrates in partial view an embodiment of the multi-link conveyor chain of the invention; and
Figure 3 illustrates in isolation a link insert according to a second embodiment of the invention.

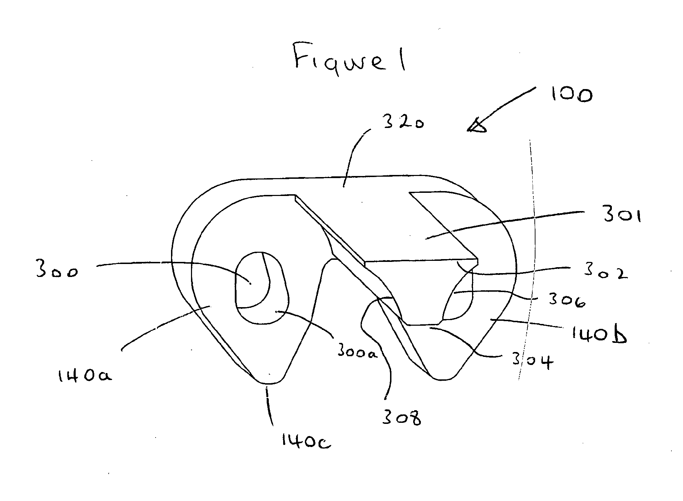

Figure 1 illustrates a link insert according to a first embodiment of the invention designated generally by reference numeral 100. The link insert 100 has twin links 140a, 140b having a substantially teardrop profile which extends into a flat-edged, sprocket engaging tooth 140c. Each link 140a, 140b is connected by a connecting portion 320 which extends laterally into a spar 301. The spar 301 has a trapezoidal section with a long side 302 substantially parallel to a short side 304. The long side 302 is connected to the short side 304 by a concave third side 306 and a concave fourth side 308. A non-circular aperture 300 in link 140a non-identically matches the elliptical section of an elongate pin. The aperture 300 is substantially elliptical with an enlarged side portion 300a extending inwardly towards connecting portion 320.

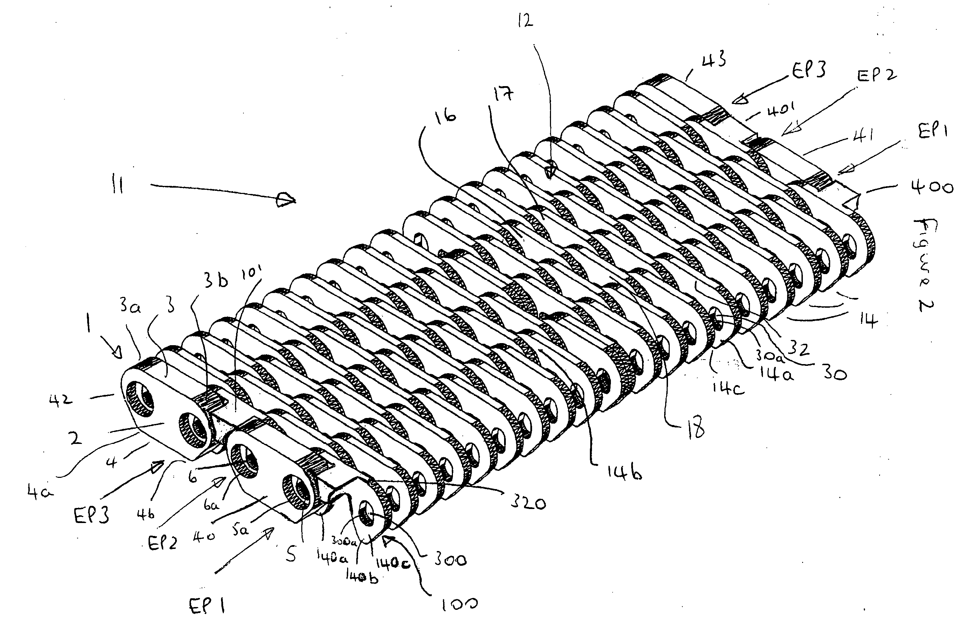

Figure 2 illustrates in partial view an embodiment of the multi-link conveyor chain of the invention designated generally by reference numeral 11. For the sake of clarity, the elongate pins are omitted.

The multi-link conveyor chain 11 provides a flat surface 12 upon which may be carried articles such as glass bottles to a processing station. The multi-link conveyor chain 11 comprises a plurality of elongate pins of elliptical section upon which are mounted a plurality of planar link plates 14. Consecutive link plates (16, 17 and 18 for example) are mounted interdigitally in a staggered fashion along one of the triplets of elongate pins (for example a first elongate pin (not illustrated but positioned at EP1), second elongate pin (not illustrated but positioned at EP2) and third elongate pin (not illustrated but positioned at EP3)) which together constitute the plurality of elongate pins.

Each of the plurality of link plates 14 has twin links 14a, 14b having a substantially teardrop profile which extends into a flat-edged, sprocket engaging tooth 14c. Each link 14a, 14b is connected by a connecting portion 32. A non-circular aperture 30 in each of links 14a, 14b non-identically matches the elliptical section of an elongate pin. The aperture 30 is substantially elliptical with an enlarged side portion 30a extending inwardly towards connecting portion 32.

A second enclosure member 40 of a plurality of identical mutually spaced apart second enclosure members is positioned at the second edge of the flat surface 12 laterally spaced apart from the link plates 14. The second enclosure member 40 comprises a trapezoidal main body 2 having a long side 3 parallel to a closed short side 4. The corners 3a and 3b of the long side 3 are rounded off (and to a lesser extent so are the corners 4a and 4b of the short side 4). The main body 2 defines a first non-circular aperture 5 and a second non-circular aperture 6, each of which are elliptical and provided with a non-tapered cylindrical counterbore 5a, 6a. A first enclosure member 41 of a plurality of identical mutually spaced apart first enclosure members is positioned at the first edge of the flat surface 12 laterally spaced apart from the link plates 14 and is identical to the second enclosure member 40. The first enclosure member 41 is mounted on the first elongate pin (not illustrated but positioned at EP1) and the second elongate pin (not illustrated but positioned at EP2). The second enclosure member 40 is mounted on the first elongate pin (not illustrated but positioned at EP1) and the second elongate pin (not illustrated but positioned at EP2).

A plurality of first link inserts as described above with reference to Figure 1 (including a first link insert 401 mounted on the second elongate pin (not illustrated but positioned at EP2) and the third elongate pin (not illustrated but positioned at EP3)) is positioned in the lateral spacing between the plurality of mutually spaced apart first enclosure members and the link plates 14 so that the spar 301 extends laterally into the spacing between the first enclosure member 41 and an adjacent first enclosure member 43.

A plurality of second link inserts as described above with reference to Figure 1 (including a second link insert 101 mounted on the second elongate pin (not illustrated but positioned at EP2) and the third elongate pin (not illustrated but positioned at EP3)) is positioned in the lateral spacing between the plurality of mutually spaced apart second enclosure members and the link plates 14 so that the spar 301 extends laterally into the spacing between the second enclosure member 40 and an adjacent second enclosure member 42.

To assemble the multi-link conveyor chain 11 of Figure 2, the first end of each of a pair of elongate pins of elliptical section is fitted with a first flat pin head by spin rivetting. The second end of each of the pair of elongate pins is inserted into the first and second elliptical apertures 5 and 6 (respectively at positions EP1 and EP2) of a first enclosure member 41. The pair of elongate pins passes through a pair of adjacent first link inserts 400 and 401 and a plurality of link plates 14 (including link plates 16, 17 and 18 described above) to a position in which the first flat pin heads are seated in the counterbores 5a and 6a of the first enclosure member 41 respectively. The second end of each of the pair of elongate pins extends beyond a pair of adjacent second link inserts 100, 101 and is inserted into the first and second elliptical apertures 5 and 6 respectively of a second enclosure member 40. The second end of each of the pair of elongate pins is secured with a flat pin head seated in the counterbore 5a and 6a.

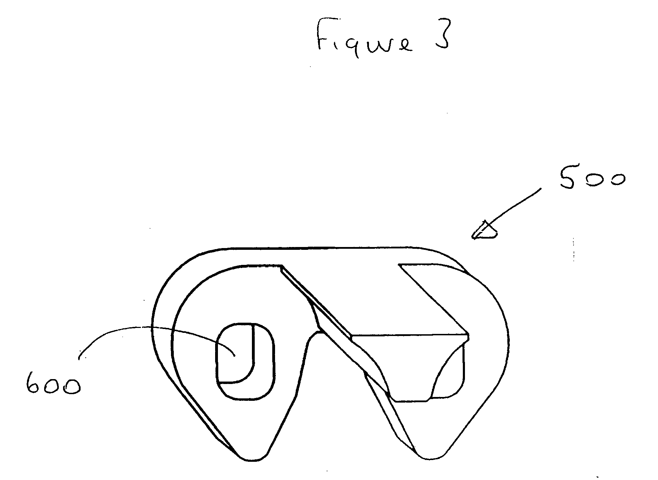

Figure 3 illustrates a link insert according to a second embodiment of the invention designated generally by reference numeral 500. The link insert 500 has essentially the same features as the first embodiment described above with reference to Figure 1 but with differently shaped non-circular apertures 600. In the second embodiment 500, the shape of each non-circular aperture 600 is a rounded rectangle.

## Claims

1. A multi-link conveyor chain adapted to provide a substantially flat horizontal surface driveable between a first processing station and a second processing station by engagement with a drive sprocket, said multi-link conveyor chain comprising:
a plurality of elongate pins spaced apart in substantially parallel relationship consisting of multiple triplets of elongate pins being a first elongate pin adjacent to a second elongate pin adjacent to a third elongate pin,
wherein the first elongate pin has a first end extending beyond a first edge of the substantially flat horizontal surface and a second end extending beyond a second edge of the substantially flat horizontal surface,
wherein the second elongate pin has a first end extending beyond a first edge of the substantially flat horizontal surface and a second end extending beyond a second edge of the substantially flat horizontal surface,
wherein the third elongate pin has a first end extending beyond the first edge of the substantially flat horizontal surface and a second end extending beyond the second edge of the substantially flat horizontal surface;
a plurality of substantially planar link plates each having a first link connected to a second link by a connecting portion, wherein each of the first link and the second link has a main body and a circumferentially dependent sprocket engaging member, wherein the main body defines an aperture whose shape essentially matches the section of an elongate pin whereby the plurality of substantially planar link plates is consecutively mounted interdigitally in a staggered relationship on the triplets of elongate pins;
a plurality of first enclosure members mutually spaced apart at the first edge of the substantially flat horizontal surface laterally spaced apart from the link plates so as to enclose the first end of each of the plurality of elongate pins, wherein each of the first enclosure members comprises a main body defining a first aperture and a second aperture, wherein the shape of each of the first aperture and second aperture essentially matches the section of an elongate pin and the depth of each of the first aperture and second aperture is sufficient to enclose the first end of an elongate pin whereby the plurality of first enclosure members includes a first enclosure member mounted on the first elongate pin and the second elongate pin;
a first pin head secured to and retaining the first end of the first elongate pin and seated in a counterbore of the first aperture;
a second pin head secured to and retaining the first end of the second elongate pin and seated in a counterbore of the second aperture; and
a plurality of first link inserts positioned in the lateral spacing between the plurality of first enclosure members and link plates, wherein each first link insert has a first link connected to a second link by a connecting portion, wherein each of the first link and the second link has a main body and a circumferentially dependent sprocket engaging member, wherein the main body defines an aperture whose shape essentially matches the section of an elongate pin, wherein the connecting portion extends laterally into a spar whose shape substantially conforms to the spacing between adjacent first enclosure members whereby the plurality of first link inserts includes a first link insert mounted on the second elongate pin and third elongate pin so that the spar extends into the spacing between the first enclosure member and an adjacent first enclosure member.

2. A multi-link conveyor chain as claimed in claim 1 further comprising:
a plurality of second enclosure members mutually spaced apart at the second edge of the substantially flat horizontal surface laterally spaced apart from the link plates so as to enclose the second end of each of the plurality of elongate pins, wherein each of the second enclosure members comprises a main body defining a third aperture and a fourth aperture, wherein the shape of each of the third aperture and fourth aperture essentially matches the section of an elongate pin and the depth of each of the third aperture and fourth aperture is sufficient to enclose the second end of an elongate pin whereby the plurality of second enclosure members includes a second enclosure member mounted on the first elongate pin and the second elongate pin;
a third pin head secured to and retaining the second end of the first elongate pin and seated in a counterbore of the third aperture;
a fourth pin head secured to and retaining the second end of the second elongate pin and seated in a counterbore of the fourth aperture; and
a plurality of second link inserts positioned in the lateral spacing between the plurality of second enclosure members and link plates, wherein each second link insert has a first link connected to a second link by a connecting portion, wherein each of the first link and the second link has a main body and a circumferentially dependent sprocket engaging member, wherein the main body defines an aperture whose shape essentially matches the section of an elongate pin, wherein the connecting portion extends laterally into a spar whose shape substantially conforms to the spacing between second adjacent enclosure members whereby the plurality of second link inserts includes a second link insert mounted on the second elongate pin and third elongate pin so that the spar extends into the spacing between the second enclosure member and an adjacent second enclosure member.

3. A multi-link conveyor chain as claimed in claim 1 or 2 wherein the non-circular section of the elongate pin is substantially elliptical or oval.

4. A multi-link conveyor chain as claimed in any preceding claim wherein the main body of each of the first link and second link of the link insert defines a non-circular aperture whose shape essentially matches the non-circular section of an elongate pin.

5. A multi-link conveyor chain as claimed in any preceding claim wherein the main body of each of the first link and second link of the link insert defines an aperture whose shape non-identically matches the section of the elongate pin.

6. A multi-link conveyor chain as claimed in any preceding claim wherein the main body of each of the first link and second link of the link insert defines an aperture whose shape is substantially a rounded rectangle.

7. A multi-link conveyor chain as claimed in any preceding claim wherein the circumferentially dependent sprocket engaging member of each of the first link and second link of the link insert is substantially flat-edged.

8. A multi-link conveyor chain as claimed in any preceding claim wherein each of the first link and second link of the link insert has a flat-edged, substantially teardrop profile.

9. A multi-link conveyor chain as claimed in any preceding claim wherein the spar of the first link insert is adapted to permit substantially unhindered articulation with the first enclosure member and the adjacent first enclosure member.

10. A multi-link conveyor chain as claimed in any of claims 2 to 9 wherein the spar of the second link insert is adapted to permit substantially unhindered articulation with the second enclosure member and the adjacent second enclosure member.

11. A multi-link conveyor chain as claimed in any preceding claim wherein the spar of the link insert has a substantially trapezoidal section.

12. A multi-link conveyor chain as claimed in any preceding claim wherein the spar of the link insert has a substantially isosceles trapezoidal section.

13. A multi-link conveyor chain as claimed in any preceding claim wherein the spar is anvil-like.

## Patentansprüche

1. Mehrglied-Förderkette, welche ausgestaltet ist, um eine im Wesentlichen flache horizontale Fläche bereitzustellen, welche zwischen einer ersten Verarbeitungsstation und einer zweiten Verarbeitungsstation durch Eingriff eines Antriebszahnkranzes betreibbar ist, wobei die Mehrglied-Förderkette umfasst:
mehrere längliche Stifte, welche in einer im Wesentlichen parallelen Beziehung beabstandet sind, die aus mehreren Dreiergruppen von länglichen Stiften besteht, welche ein erster länglicher Stift benachbart zu einem zweiten länglichen Stift benachbart zu einem dritten länglichen Stift sind,
wobei der erste längliche Stift ein erstes Ende, welches sich über einen ersten Rand der im Wesentlichen flachen horizontalen Fläche erstreckt, und ein zweites Ende, welches sich über einen zweiten Rand der im Wesentlichen flachen horizontalen Fläche erstreckt, aufweist,
wobei der zweite längliche Stift ein erstes Ende, welches sich über einen ersten Rand der im Wesentlichen flachen horizontalen Fläche erstreckt, und ein zweites Ende, welches sich über einen zweiten Rand der im Wesentlichen flachen horizontalen Fläche erstreckt, aufweist,
wobei der dritte längliche Stift ein erstes Ende, welches sich über einen ersten Rand der im Wesentlichen flachen horizontalen Fläche erstreckt, und ein zweites Ende, welches sich über einen zweiten Rand der im Wesentlichen flachen horizontalen Fläche erstreckt, aufweist;
mehrere im Wesentlichen ebene Verbindungsplatten, welche jeweils ein erstes Verbindungselement, das mit einem zweiten Verbindungselement über einen Verbindungsabschnitt verbunden ist, aufweist, wobei das erste Verbindungselement und das zweite Verbindungselement jeweils einen Hauptkörper und ein am Umfang anhängiges Zahnkranzeingriffsteil aufweisen, wobei der Hauptkörper eine Öffnung definiert, deren Form im Wesentlichen mit dem Querschnitt eines länglichen Stiftes übereinstimmt, wobei die mehreren im Wesentlichen ebenen Verbindungsplatten aufeinanderfolgend ineinandergreifend in einer versetzten Beziehung auf den Dreiergruppen der länglichen Stiften montiert sind;
mehrere erste Einfassungsteile, welche wechselseitig an dem ersten Rand der im Wesentlichen flachen horizontalen Fläche und seitlich von den Verbindungsplatten beabstandet sind, um so das erste Ende von jedem der mehreren länglichen Stifte einzufassen, wobei jedes der ersten Einfassungsteile einen Hauptkörper umfasst, welcher eine erste Öffnung und eine zweite Öffnung definiert, wobei die Form der ersten Öffnung und der zweiten Öffnung im Wesentlichen jeweils mit dem Querschnitt eines länglichen Stiftes übereinstimmt und wobei die Tiefe der ersten Öffnung und der zweiten Öffnung jeweils ausreicht, um das erste Ende eines länglichen Stiftes aufzunehmen, wobei die mehreren ersten Einfassungsteile ein erstes Einfassungsteil aufweisen, welches auf dem ersten länglichen Stift und dem zweiten länglichen Stift montiert ist;
ein erster Stiftkopf, welcher an dem ersten Ende des ersten länglichen Stiftes befestigt ist und dieses zurückhält und in einer Ansenkung der ersten Öffnung aufgenommen ist;
ein zweiter Stiftkopf, welcher an dem ersten Ende des zweiten länglichen Stiftes befestigt ist und diesen zurückhält und in einer Ansenkung der zweiten Öffnung aufgenommen ist; und
mehrere erste Verbindungseinsätze, welche in dem seitlichem Zwischenraum zwischen den mehreren ersten Einfassungsteilen und den Verbindungsplatten angeordnet sind, wobei jeder erste Verbindungseinsatz ein erstes Verbindungselement aufweist, welches mit einem zweiten Verbindungselement durch einen Verbindungsabschnitt verbunden ist, wobei das erste Verbindungselement und das zweite Verbindungselement jeweils einen Hauptkörper und ein am Umfang anhängiges Zahnkranzeingriffsteil aufweisen, wobei der Hauptkörper eine Öffnung definiert, deren Form im Wesentlichen mit dem Querschnitt eines länglichen Stiftes übereinstimmt, wobei sich der Verbindungsabschnitt seitlich in einen Spier erstreckt, dessen Form im Wesentlichen mit dem Zwischenraum zwischen benachbarten ersten Einfassungsteilen übereinstimmt, wobei die mehreren ersten Verbindungselementeinsätze einen ersten Verbindungselementeinsatz aufweisen, welcher auf dem zweiten länglichen Stift und dem dritten länglichen Stift montiert ist, so dass sich der Spier in den Zwischenraum zwischen dem ersten Einfassungsteil und einem benachbarten ersten Einfassungsteil erstreckt.

2. Mehrglied-Förderkette nach Anspruch 1, darüber hinaus umfassend:
mehrere zweite Einfassungsteile, welche wechselseitig an dem zweiten Rand der im Wesentlichen flachen horizontalen Fläche und seitlich von den Verbindungsplatten beabstandet sind, um so das zweite Ende von jedem der mehreren länglichen Stifte einzufassen, wobei jedes der zweiten Einfassungsteile einen Hauptkörper umfasst, welcher eine dritte Öffnung und eine vierte Öffnung definiert, wobei die Form der dritten Öffnung und der vierten Öffnung jeweils im Wesentlichen mit dem Querschnitt eines länglichen Stiftes übereinstimmt und die Tiefe der dritten Öffnung und der vierten Öffnung im Wesentlichen ausreichend ist, um das zweite Ende von einem länglichen Stift einzufassen, wobei die mehreren zweiten Einfassungsteile ein zweites Einfassungsteil aufweisen, welches auf dem ersten länglichen Stift und dem zweiten länglichen Stift montiert ist;
einen dritten Stiftkopf, welcher mit dem zweiten Ende des ersten länglichen Stiftes befestigt ist und diesen zurückhält und in einer Ansenkung der dritten Öffnung aufgenommen ist;
einen vierten Stiftkopf, welcher mit dem zweiten Ende des zweiten länglichen Stiftes befestigt ist und diesen zurückhält und in einer Ansenkung der vierten Öffnung aufgenommen ist; und
mehrere zweite Verbindungseinsätze, welche in dem seitlichem Zwischenraum zwischen den mehreren zweiten Einfassungsteilen und Verbindungsplatten angeordnet sind, wobei jeder zweite Verbindungseinsatz ein erstes Verbindungselement aufweist, welches mit einem zweiten Verbindungselement durch einen Verbindungsabschnitt verbunden ist, wobei das erste Verbindungselement und das zweite Verbindungselement jeweils einen Hauptkörper und ein am Umfang anhängiges Zahnkranzeingriffsteil aufweisen, wobei der Hauptkörper eine Öffnung definiert, deren Form im Wesentlichen mit dem Querschnitt eines länglichen Stiftes übereinstimmt, wobei sich der Verbindungsabschnitt seitlich in einen Spier erstreckt, dessen Form im Wesentlichen mit dem Zwischenraum zwischen zweiten benachbarten Einfassungsteilen übereinstimmt, wobei die mehreren zweiten Verbindungseinsätze einen zweiten Verbindungseinsatz aufweisen, welcher auf dem zweiten länglichen Stift und dem dritten länglichen Stift montiert ist, so dass sich der Spier in den Zwischenraum zwischen dem zweiten Einfassungsteil und einem benachbarten zweiten Einfassungsteil erstreckt.

3. Mehrglied-Förderkette nach Anspruch 1 oder 2, **dadurch gekennzeichnet, dass** der nicht kreisförmige Abschnitt des länglichen Stiftes im Wesentlichen elliptisch oder oval ist.

4. Mehrglied-Förderkette nach einem der vorhergehenden Ansprüche, **dadurch gekennzeichnet, dass** der Hauptkörper des ersten Verbindungselements und des zweiten Verbindungselements des Verbindungseinsatzes jeweils eine nicht kreisförmige Öffnung definiert, deren Form im Wesentlichen mit dem nicht kreisförmigen Querschnitt eines länglichen Stiftes übereinstimmt.

5. Mehrglied-Förderkette nach einem der vorhergehenden Ansprüche, **dadurch gekennzeichnet, dass** der Hauptkörper des ersten Verbindungselements und des zweiten Verbindungselements des Verbindungseinsatzes jeweils eine Öffnung definiert, deren Form nicht identisch mit dem Querschnitt des länglichen Stiftes übereinstimmt.

6. Mehrglied-Förderkette nach einem der vorhergehenden Ansprüche, **dadurch gekennzeichnet, dass** der Hauptkörper des ersten Verbindungselements und des zweiten Verbindungselements des Verbindungseinsatzes jeweils eine Öffnung definiert, deren Form im Wesentlichen einem abgerundeten Rechteck entspricht.

7. Mehrglied-Förderkette nach einem der vorhergehenden Ansprüche, **dadurch gekennzeichnet, dass** das am Umfang anhängige Zahneingriffsteil des ersten Verbindungselements und des zweiten Verbindungselements des Verbindungseinsatzes jeweils im Wesentlichen flache Ränder aufweist.

8. Mehrglied-Förderkette nach einem der vorhergehenden Ansprüche, **dadurch gekennzeichnet, dass** das erste Verbindungselement und das zweite Verbindungselement des Verbindungseinsatzes jeweils flache Ränder mit einem im Wesentlichen tropfenförmigen Profil aufweisen.

9. Mehrglied-Förderkette nach einem der vorhergehenden Ansprüche, **dadurch gekennzeichnet, dass** der Spier des ersten Verbindungseinsatzes ausgestaltet ist, um eine im Wesentlichen ungehinderte Gelenkverbindung mit dem ersten Einfassungsteil und dem benachbarten ersten Einfassungsteil zu ermöglichen.

10. Mehrglied-Förderkette nach einem der Ansprüche 2 bis 9, **dadurch gekennzeichnet, dass** der Spier des zweiten Verbindungseinsatzes ausgestaltet ist, um eine im Wesentlichen ungehinderte Gelenkverbindung mit dem zweiten Einfassungsteil und dem benachbarten zweiten Einfassungsteil zu ermöglichen.

11. Mehrglied-Förderkette nach einem der vorhergehenden Ansprüche, **dadurch gekennzeichnet, dass** der Spier des Verbindungseinsatzes einen im Wesentlichen trapezförmigen Querschnitt aufweist.

12. Mehrglied-Förderkette nach einem der vorhergehenden Ansprüche, **dadurch gekennzeichnet, dass** der Spier des Verbindungseinsatzes einen im Wesentlichen gleichschenkligen trapezförmigen Querschnitt aufweist.

13. Mehrglied-Förderkette nach einem der vorhergehenden Ansprüche, **dadurch gekennzeichnet, dass** der Spier einem Amboss ähnlich ist.

## Revendications

1. Chaîne de convoyeur à maillons multiples adaptée pour fournir une surface horizontale sensiblement plate pouvant être entraînée entre une première station de traitement et une deuxième station de traitement par engagement avec un pignon d'entraînement, ladite chaîne de convoyeur à maillons multiples comprenant :
une pluralité de goupilles allongées espacées en relation sensiblement parallèles constituée de multiples triplets de goupilles allongées étant une première goupille allongée adjacente à une deuxième goupille allongée adjacente à une troisième goupille allongée,
dans laquelle la première goupille allongée a une première extrémité s'étendant au-delà d'un premier bord de la surface horizontale sensiblement plate et une deuxième extrémité s'étendant au-delà d'un deuxième bord de la surface horizontale sensiblement plate,
dans laquelle la deuxième goupille allongée a une première extrémité s'étendant au-delà d'un premier bord de la surface horizontale sensiblement plate et une deuxième extrémité s'étendant au-delà d'un deuxième bord de la surface horizontale sensiblement plate,
dans laquelle la troisième goupille allongée a une première extrémité s'étendant au-delà d'un premier bord de la surface horizontale sensiblement plate et une deuxième extrémité s'étendant au-delà d'un deuxième bord de la surface horizontale sensiblement plate ;
une pluralité de plaques de liaison sensiblement planes ayant chacune un premier maillon connecté à un deuxième maillon par une partie de connexion, dans laquelle chacun du premier maillon et du deuxième maillon a un corps principal et un élément d'engagement de pignon dépendant de façon circonférentielle, dans laquelle le corps principal définit une ouverture dont le profil correspond essentiellement à la section d'une goupille allongée moyennant quoi la pluralité de plaques de liaison sensiblement planes est montée consécutivement de manière interdigitale dans une relation décalée sur les triplets de goupilles allongées ;
une pluralité de premiers éléments d'enveloppe mutuellement espacés au niveau du premier bord de la surface horizontale sensiblement plate espacés latéralement par rapport aux plaques de liaison de manière à envelopper la première extrémité de chacune de la pluralité de goupilles allongées, dans laquelle chacun des premiers éléments d'enveloppe comprend un corps principal définissant une première ouverture et une deuxième ouverture, dans laquelle le profil de chacune de la première ouverture et de la deuxième ouverture correspond essentiellement à la section d'une goupille allongée et la profondeur de chacune de la première ouverture et de la deuxième ouverture est suffisante pour envelopper la première extrémité d'une goupille allongée, moyennant quoi la pluralité de premiers éléments d'enveloppe comprend un premier élément d'enveloppe monté sur la première goupille allongée et la deuxième goupille allongée ;
une première tête de goupille fixée à et retenant la première extrémité de la première goupille allongée et logée dans un contre-alésage de la première ouverture ;
une deuxième tête de goupille fixée à et retenant la première extrémité de la deuxième goupille allongée et logée dans un contre-alésage de la deuxième ouverture ; et
une pluralité de premiers inserts de liaison positionnés dans l'espacement latéral entre la pluralité de premiers éléments d'enveloppe et les plaques de liaison, dans laquelle chaque premier insert de liaison a un premier maillon connecté à un deuxième maillon par une partie de connexion, dans laquelle chacun du premier maillon et du deuxième maillon a un corps principal et un élément d'engagement de pignon dépendant de façon circonférentielle, dans laquelle le corps principal définit une ouverture dont le profil correspond essentiellement à la section d'une goupille allongée, dans laquelle la partie de connexion s'étend latéralement en un longeron dont le profil se conforme sensiblement à l'espacement entre des premiers éléments d'enveloppe adjacents, moyennant quoi la pluralité de premiers inserts de liaison comprend un premier insert de liaison monté sur la deuxième goupille allongée et la troisième goupille allongée de manière que le longeron s'étende dans l'espacement entre le premier élément d'enveloppe et un premier élément d'enveloppe adjacent.

2. Chaîne de convoyeur à maillons multiples selon la revendication 1, comprenant en outre :
une pluralité de deuxièmes éléments d'enveloppe mutuellement espacés au niveau du deuxième bord de la surface horizontale sensiblement plate espacés latéralement par rapport aux plaques de liaison de manière à envelopper la deuxième extrémité de chacune de la pluralité de goupilles allongées, dans laquelle chacun des deuxièmes éléments d'enveloppe comprend un corps principal définissant une troisième ouverture et une quatrième ouverture, dans laquelle le profil de chacune de la troisième ouverture et de la quatrième ouverture correspond essentiellement à la section d'une goupille allongée et la profondeur de chacune de la troisième ouverture et de la quatrième ouverture est suffisante pour envelopper la deuxième extrémité d'une goupille allongée, moyennant quoi la pluralité de deuxièmes éléments d'enveloppe comprend un deuxième élément d'enveloppe monté sur la première goupille allongée et la deuxième goupille allongée ;
une troisième tête de goupille fixée à et retenant la deuxième extrémité de la première goupille allongée et logée dans un contre-alésage de la troisième ouverture ;
une quatrième tête de goupille fixée à et retenant la deuxième extrémité de la deuxième goupille allongée et logée dans un contre-alésage de la quatrième ouverture ; et
une pluralité de deuxièmes inserts de liaison positionnés dans l'espacement latéral entre la pluralité de deuxièmes éléments d'enveloppe et les plaques de liaison, dans laquelle chaque deuxième insert de liaison a un premier maillon connecté à un deuxième maillon par une partie de connexion, dans laquelle chacun du premier maillon et du deuxième maillon a un corps principal et un élément d'engagement de pignon dépendant de façon circonférentielle, dans laquelle le corps principal définit une ouverture dont le profil correspond essentiellement à la section d'une goupille allongée, dans laquelle la partie de connexion s'étend latéralement en un longeron dont le profil se conforme sensiblement à l'espacement entre des deuxièmes éléments d'enveloppe adjacents, moyennant quoi la pluralité de deuxièmes inserts de liaison comprend un deuxième insert de liaison monté sur la deuxième goupille allongée et la troisième goupille allongée de manière que le longeron s'étende dans l'espacement entre le deuxième élément d'enveloppe et un deuxième élément d'enveloppe adjacent.

3. Chaîne de convoyeur à maillons multiples selon la revendication 1 ou 2, dans laquelle la section non circulaire de la goupille allongée est sensiblement elliptique ou ovale.

4. Chaîne de convoyeur à maillons multiples selon l'une quelconque des revendications précédentes, dans laquelle le corps principal de chacun du premier maillon et du deuxième maillon de l'insert de liaison définit une ouverture non circulaire dont le profil correspond essentiellement à la section non circulaire d'une goupille allongée.

5. Chaîne de convoyeur à maillons multiples selon l'une quelconque des revendications précédentes, dans laquelle le corps principal de chacun du premier maillon et du deuxième maillon de l'insert de liaison définit une ouverture dont le profil correspond de façon non identique à la section de la goupille allongée.

6. Chaîne de convoyeur à maillons multiples selon l'une quelconque des revendications précédentes, dans laquelle le corps principal de chacun du premier maillon et du deuxième maillon de l'insert de liaison définit une ouverture dont le profil est sensiblement un rectangle arrondi.

7. Chaîne de convoyeur à maillons multiples selon l'une quelconque des revendications précédentes, dans laquelle l'élément d'engagement de pignon dépendant de façon circonférentielle de chacun du premier maillon et du deuxième maillon de l'insert de liaison est sensiblement à bord plat.

8. Chaîne de convoyeur à maillons multiples selon l'une quelconque des revendications précédentes, dans laquelle chacun du premier maillon et du deuxième maillon de l'insert de liaison a un profil à bord plat sensiblement en forme de larme.

9. Chaîne de convoyeur à maillons multiples selon l'une quelconque des revendications précédentes, dans laquelle le longeron du premier insert de liaison est adapté pour permettre une articulation sensiblement sans entrave avec le premier élément d'enveloppe et le premier élément d'enveloppe adjacent.

10. Chaîne de convoyeur à maillons multiples selon l'une quelconque des revendications 2 à 9, dans laquelle le longeron du deuxième insert de liaison est adapté pour permettre une articulation sensiblement sans entrave avec le deuxième élément d'enveloppe et le deuxième élément d'enveloppe adjacent.

11. Chaîne de convoyeur à maillons multiples selon l'une quelconque des revendications précédentes, dans laquelle le longeron de l'insert de liaison a une section sensiblement trapézoïdale.

12. Chaîne de convoyeur à maillons multiples selon l'une quelconque des revendications précédentes, dans laquelle le longeron de l'insert de liaison a une section sensiblement trapézoïdale isocèle.

13. Chaîne de convoyeur à maillons multiples selon l'une quelconque des revendications précédentes, dans laquelle le longeron est en forme d'enclume.
